Europäisches Patentamt

European Patent Office

Office européen des brevets

(11) Veröffentlichungsnummer : **0 266 476 B1**

# EUROPÄISCHE PATENTSCHRIFT

(45) Veröffentlichungstag der Patentschrift :
24.07.91 Patentblatt 91/30

(51) Int. Cl.$^5$ : **B05B 15/12, C02F 1/24**

(21) Anmeldenummer : 87102415.4

(22) Anmeldetag : 20.02.87

(54) Verfahren und Vorrichtung zur Aufbereitung von Schlammwasser.

(30) Priorität : 05.11.86 DE 3637686

(43) Veröffentlichungstag der Anmeldung :
11.05.88 Patentblatt 88/19

(45) Bekanntmachung des Hinweises auf die
Patenterteilung :
24.07.91 Patentblatt 91/30

(84) Benannte Vertragsstaaten :
AT BE CH DE ES FR GB IT LI NL SE

(56) Entgegenhaltungen :
EP-A- 0 065 382
DE-A- 1 792 607
DE-A- 2 322 792
US-A- 1 807 823
US-A- 2 805 844
US-A- 3 341 016

(73) Patentinhaber : Ipsen, Harald
Hainburg Strasse 3
W-6054 Rodgau 3 Niederroden (DE)

(72) Erfinder : Ipsen, Harald
Hainburg Strasse 3
W-6054 Rodgau 3 Niederroden (DE)

(74) Vertreter : Hanke, Hilmar et al
Patentanwälte, Dipl.-Ing. Hans Köster
Dipl.-Ing., Dipl. Wirtsch, Hilmar Hanke
Leopoldstrasse 77
W-8000 München 40 (DE)

## Beschreibung

Die Erfindung betrifft ein Verfahren und eine Vorrichtung zum Aufbereiten von inhomogene Feststoff-Aufschlämmungen enthaltendem Wasser, insbesondere zum Trennen und Entfernen von Lackschlamm aus einem Lackschlamm-Wassergemisch, wobei das Lackschlamm-Wassergemisch oder dergl. einem Behälter zugeleitet, an die Wasseroberfläche geführt und im Bereich der Wasseroberfläche einer gerichteten Horizontalströmung ausgesetzt wird, im Behälter der Lackschlammteil getrennt wird und die getrennten Teile aus Lackschlamm und Wasser aus dem Behälter wieder abgeleitet und gegebenenfalls weiterverwendet werden.

Es sind schon Geräte zur Entfernung von Lackschlamm aus dem Berieselungswasser von Lackspritzanlagen bekannt, bei denen sich die zu lackierenden Teile vor einer als Spritzwand bezeichneten Fläche befinden und mit Lack besprüht werden. Zwischen der erwähnten Spritzwand und dem zu lackierenden Teil sind in aller Regel Berieselungsvorrichtungen derart angeordnet, daß ein Vorhang aus herabrieselndem Wasser gebildet wird, der die Lackteilchen wegschwemmt, die beim Spritzlackiervorgang an dem zu lackierenden Teil vorbeifliegen, aufgefangen und in geordneter Weise beseitigt werden müssen. Es ist üblich, daß dem als Vorhang herabrieselnden Wasser direkt oder erst in dem Auffangbehälter Koaguliermittel zugesetzt werden, damit ein nichtklebender Schlamm gebildet wird, bestehend aus Lackpartikeln, Wasser und dem vorgenannten Koaguliermittel. Dadurch wird die Entfernung des Lackschlamms generell erleichtert. Wie sich die Lackpartikel in dem Lackschlamm absetzen, hängt von der Größe der Lackpartikel und vom gesamten Lacksystem ab. Es sind dies chemisch-physikalische Vorgänge, wobei die chemische Zusammensetzung des Spritzlackes und der Koaguliermittel eine besondere Rolle spielt.

Es ist bekannt, daß sich der Lackschlamm im Auffangbehälter zum größten Teil unten ansammelt. Hierbei ergibt sich das Problem, die Lackpartikel zusammen mit dem Koaguliermittel aus dem unteren Bereich des Spritzwassers zu entfernen, insbesondere im Hinblick auf eine geringe Umweltbelastung und auf einen geringen Einsatz an Energie. Auch sind Geräte bekannt, die dazu dienen, den nicht immer unten liegenden Lackschlamm nach oben zu transportieren, um ihn an der Wasseroberfläche zu entfernen. Nun ist es jedoch möglich, daß sich nicht der gesamte Lackschlamm unten ansammelt, sondern sich in der Auffangwanne eine Lackschlamm-Flüssigkeitsmischung ansammelt, die aus schwebenden Lackpartikeln, Wasser und die Lackpartikel umhüllendem Koaguliermittel besteht. Es kommt nun darauf an, den im Wasser befindlichen Lackschlamm nach oben an die Oberfläche zu bringen, um ihn dort zu entfernen. Hierbei werden verschiedene Techniken nach dem Stand der Technik eingeschlagen.

Bei einem Gerät nach dem Stand der Technik wird in einem Rohr das Lackschlamm-Wassergemisch durch eine Düse gepreßt, das nach dem Injektorprinzip im Düsenbereich Außenluft ansaugt. Es entsteht so ein Gemisch aus Luft, Wasser und Lackpartikeln, das in einem Rohr abwärts in einen Sammelbehälter geleitet wird. Durch die im Gemisch enthaltenen Luftblasen werden dann die Lackpartikel grundsätzlich aufwärts transportiert, um dort mechanisch entfernt zu werden. Ein Nachteil bei diesem bekannten Gerät besteht darin, daß die Verwirbelung im Bereich des Düsenaustritts bewirkt, daß eine bestimmte Menge an vom Koaguliermittel befreiten Lackpartikeln nach unten sinkt und sich dort ansammelt. Ein weiterer Nachteil besteht darin, daß die Lackpartikel eine gewisse Zeit benötigen, um mit den Luftblasen aufwärts zu schwimmen. Dadurch sind einer optimalen Durchflußmenge des bekannten Aufbereitungsgeräts Grenzen gesetzt. Es wird hier außerdem eine zusätzliche Pumpe zum Transport des Lack-Wasser-Koaguliermittel-Gemisches und zur Druckerzeugung für die Erzielung der Injektorwirkung benötigt. Ferner ist noch eine weitere Pumpe erforderlich zum Rücktransport des Berieselungswassers.

Zum Stand der Technik gehören auch Geräte, bei denen das Lackschlamm-Wassergemisch in einem Filter abgeleitet wird, daß Wasser abläuft und Lackschlamm zurückbleibt. Nachteilig hierbei ist, daß die Filter verstopfen und ausgewechselt werden müssen. Es sind auch umlaufende Bandfilter bekannt, bei denen das Wasser nach unten abläuft und der Lackschlamm am Bandende abfällt. Der Nachteil hierbei ist, daß bei jedem Durchgang der Bandfilter gewechselt werden muß, weil er zusammen mit dem Lackschlamm in den Sammelbehälter gelangt und nicht ohne aufwendige Reinigung benutzt werden kann.

Ferner gehören zum Stand der Technik noch Geräte, in denen die Strömungsgeschwindigkeit extrem niedrig gehalten wird. Dabei ist es möglich, aufschwimmende Lackteilchen mit Sieben abzuschöpfen. Ein Nachteil sind die für die geringe Durchflußgeschwindigkeit notwendigen übermäßig großen Abmessungen der Geräte.

Diverse Verfahren zum Aufbereiten von inhomogene FeststoffAufschlämmungen enthaltendem Wasser sind schließlich aus DE-A-1 792 607 und EP-A-0 065 382 bekannt, wobei das Lackschlamm-Wassergemisch oder dergl. einem Behälter zugeleitet, an die Wasseroberfläche geführt und im Bereich der Wasseroberfläche einer gerichteten Horizontalströmung ausgesetzt wird, im Behälter der Lackschlammteil getrennt wird und die getrennten Teile aus Lackschlamm und Wasser aus dem Behälter wieder abgeleitet und gegebenenfalls weiterverwendet werden.

Um das Lackschlamm-Wassergemisch an die Wasseroberfläche zu leiten, wird gemäß DE-A-1 792 607 die Strömung vor dem dortigen Schirm durch eine zugeleitete Luft- oder Gasdispersion aus feinsten Bläschen angereichert, wobei sich die Bläschen an den Flocken anlagern und diese durch den Kanal vor dem Schirm an die Wasseroberfläche transportieren (was dem herkömmlichen Flotationsprinzip entspricht).

In ähnlicher Weise wird gemäß EP-A-0 065 382 der in den Behälter zugeleitete Lackschlamm zusätzlich durch Luft nach dem Injektorprinzip in einer Luftleitung angereichert. Ein Auslaßende der Lackschlamm-Zuführungsleitung weist einen konischen Diffusor auf, welcher letztendlich dafür sorgt, daß im Behälter ein Lackschlamm-Luftgemisch entsteht, welches das Aufschwimmen zur Wasseroberfläche unterstützt. Primär werden jedoch durch bodenseitig gerichtete Düsen die Schlammpartikel nach oben geschleudert bzw. gewirbelt ; insofern wird auch nicht eine streng ausgerichtete Horizontalströmung an der Wasseroberfläche eingerichtet. Viele Einzelwirbel entstehen an unterschiedlicher Stelle im Behälter, welche letztendlich ein Hochbefördern des Lackschlamm-Wassergemisches an die Oberfläche stören.

Aufgabe der Erfindung ist die Schaffung eines Verfahrens und einer Vorrichtung zum Aufbereiten von inhomogenen Feststoff-Aufschlämmungen enthaltendem Wasser der eingangs genannten Art, bei dem mit Hilfe einfacher Mittel eine effektive und zuverlässige Aufbereitung bzw. Trennung der Aufschlämmung, insbesondere des Lackschlamms, aus dem Wasser erzielt wird.

Gelöst wird die der Erfindung zugrundeliegende Aufgabe durch die in den Ansprüchen 1 und 3 angegebenen Mittel.

Vorteilhaft weitergebildet wird der Erfindungsgenstand durch die Merkmale der Ansprüche 2 und 4 bis 11.

Insbesondere wird das Lackschlamm-Wassergemisch im Behälter im Bereich der Wasseroberfläche nicht nur einer an sich bekannten gerichteten Horizontalströmung ausgesetzt, sondern es werden die im Behälter oben aufschwimmenden Lackschlamm-Schwebeteilchen durch eine ausschließlich in einem vorzugsweise ersten bzw. vorderen Horizontalströmungsabschnitt ausgebildete flächige im wesentlichen aufwärts gerichtete Luftblasenströmung aus feinsten Luftbläschen praktisch über den gesamten Bereich der Wasseroberfläche gehalten, mit der Horizontalströmung mitgeführt und im Bereich des Endes der Horizontalströmung einer mechanischen Schlammaustragvorrichtung zugeführt. Es wird also vom herkömmlichen Flotationsprinzip beispielsweise gemäß DE-A-1792607 insofern abgewichen, als das Lackschlamm-Wassergemisch vor oder während der Zuführung nicht zusätzlich mit Luft angereichert werden muß. Es genügt die im Behälter vorgesehene Luftblasenströmung, um das einmal an die Wasseroberfläche gelangte Lackschlamm-Wassergemisch an der Oberfläche zu halten und einer mechanischen Schlammaustragvorrichtung zuzuführen.

Bei einem bevorzugten Verfahren ist, bezogen auf die gerichtete Horizontalströmung des Wassers, die Länge des vorderen Luftblasenströmungsabschnitts einstellbar. Dadurch kann ein Aufbereitungsgerät auf eine individuelle Beschaffenheit bzw. Konsistenz einer zu trennenden Aufschlämmung entsprechend der Horizontalströmungsverhältnissen des Wassers eingestellt werden, so daß praktisch keine Lackschlamm-Schwebeteilchen im Wasser nach unten absinken, insbesondere in einem Bereich, in dem behälterunterseitig nicht Luftbläschen eingelassen werden. Dadurch kann das Aufbereitungsgerät sehr kompakt und insbesondere transportabel ausgestaltet werden, ohne daß die Effektivität oder Zuverlässigkeit der Lackschlammaufbereitung darunter leidet.

Ein nach dem erfindungsgemäßen Verfahren betriebenes Gerät mit einem Lackschlamm-Wassergemischbehälter, welcher eine Lackschlamm-Wassergemisch-Zuführungsleitung bzw. -öffnung und auf der entgegengesetzten Behälterseite einen Austritt aufweist, um im Bereich der Wasseroberfläche eine gerichtete Horizontalströmung des Lackschlamm-Wassergemisches einzurichten, sowie mit einer Lackschlamm-Austragvorrichtung, kennzeichnet sich dadurch, daß auf dem Behälterboden im Bereich unterhalb der Zuführungsöffnung ein Druckluftbehälter mit oberseitiger gasdurchlässiger Feststoffplatte aus fein porösem Feststoffmaterial vorgesehen ist, wobei sich die Feststoffplatte über die gesamte innere Breite des Behälters und vorzugsweise über einen vorderen Abschnitt in Richtung Wasseraustritt erstreckt.

Das Gerät, bei dem eine untere Zuführungsöffnung eine nachgeordnete, im wesentlichen vertikal verlaufende Zwischenwand aufweist, ist zweckmäßigerweise dadurch weitergebildet, daß — gesehen in Richtung der Horizontalströmung der Zwischenwand die Feststoffplatte unmittelbar nachgeordnet ist.

Vorteilhafterweise erstrecken sich Zuführungsöffnung und Wasseraustritt über die gesamte innere Breite des Behälters, so daß eine flächige gerichtete Horizontalströmung an der Wasseroberfläche eingerichtet wird.

Für die Einrichtung einer breiten Zuführungsöffnung und breiten Wasseraustrittsöffnung ist zweckmäßigerweise jeweils eine im wesentlichen vertikal verlaufende Wand im Behälterinneren vorgesehen, die bevorzugt im wesentlichen gleiche Behälterhöhe aufweisen. Zumindest die wasseraustrittsseitige Wand wirkt hierbei nacht Art eines Wehrs, wobei nach der Wasseraustritts-Vertikalwand jenseits der Wasseroberfläche des Behälters ein tiefer gelegener Wasserablaufstutzen am Behälter vorgesehen sein kann.

Für den Fall, daß sich tatsächlich an den vorgenannten beiden Vertikalwänden Lackschlammpartikel übermäßig festsetzen sollten, können bevorzugt die beiden Vertikalwände im Behälter ausgetauscht werden, indem diese lösbar im Behälter befestigt sind. Um feinste Luftbläschen flächig gleichmäßig verteilt nicht intermittierend stoßartig, sondern im wesentlichen kontinuierlich der Behälterunterseite zuzuleiten, ist erfindungsgemäß ein Druckluftbehälter mit einer oberseitigen praktisch nicht durchbiegbaren Festsoffplatte aus porösem Sintermaterial oder dergl. vorgesehen, wobei die Feststoffplatte hinsichtlich ihrer Länge entweder teleskopartig verlängerbar ist, um einstellbare Längen des vorderen Luftbläschen-Strömungsabschnitts einzurichten, oder aber modulartige zusammensetzbare Verlängerungsstücke eines Druckluftbehälters für den vorgenannten Zweck vorgesehen sind.

Die Feststoffplatte ist in Richtung Wasseraustritt geringfügig nach unten geneigt bzw. insgesamt schräg angeordnet, damit infolge des Schwerkrafteinflusses Lackschlammreste nach dem Abschalten des Geräts in den Bereich eines Restauslaufstutzens gelangen können.

Zweckmäßigerweise ist die Wasseraustritts-Vertikalwand bodenseitig auf einer Ablaufschräge des Behälters befestigt, so daß letztlich doch im Wasser herabsinkende Lackschlamm-Schwebeteilchen dem vorgenannten Restauslaufstutzen zugeleitet werden kann, ohne den Behälterboden zu verunreinigen. Entsprechend ist in zweckmäßiger Weiterbildung der Erfindung am unteren Ende der Ablaufschräge der vorgenannte Auslaufstutzen vorgesehen.

Über der Wasseraustritts-Vertikalwand befindet sich in zweckmäßiger Weiterbildung der Erfindung eine Lackschlamm-Austragschräge als Teil einer Lackschlamm-Austragvorrichtung, wobei die Austragschräge in den wasseroberflächenseitigen Lackschaum des Behälters insbesondere geringfügig mit kurzer Längserstreckung in Richtung Zuführungs-Öffnung hineinreicht. Am wasseroberflächenseitigen Ende der Austragschräge ist vorteilhafterweise ein nach unten weisendes Abweisblech quer über die innere Behälterbreite befestigt, welches insbesondere rechtwinklig zur Austragschräge angeordnet ist. Das Abweisblech steht mithin schräg im Wasser und unterstützt die aufsteigenden Lackschlamm-Schwebeteilchen nach dem eigentlichen vorderen Luftblasen-Strömungsabschnitt dahingehend, daß auch diese Schwebeteilchen der Austragsvorrichtung zugeführt werden.

Zwischen vorgenannten Abweisblech und vorgenannter Wasseraustritts-Vertikalwand befindet sich ferner zumindest ein weiteres quer über die innere Behälterbreite sich erstreckendes Abweisblech in etwa parallel zum vorgenannten Abweisblech, und zwar im Bereich des zusätzlichen Restauslaufstutzens.

Über der Lackschlamm-Austragschräge ist zumindest ein Lackschlamm-Schieber angeordnet, der im wesentlichen über die Länge der Austragschräge hin- und herbewegt werden kann, um den separierten Lackschlamm abzuführen. Es genügt, wenn der Schieber im vorgenannten Bereich bertrieben wird, da die gerichtete Horizontalströmung des Wassers dafür Sorge trägt, daß der Lackschlamm zur Austragschräge gelangt. Mithin kann auch die Lackschlamm-Austragsvorrichtung gemäß der Erfindung sehr kompakt gestaltet werden. Nach dem Stand der Technik bestreichen Schieber die gesamte Wasseroberfläche.

Die Erfindung kann mithin effektiv in kleinen transportablen bequem zu handhabenden Aufbereitungsgeräten realisiert werden. Der Wasser- und Energieverbrauch wird gegenüber dem Stand der Technik entscheidend verringert. Das gereinigte Wasser eignet sich zur Weiterverwendung in der Lackspritzanlage. Ein weiterer Vorteil der Erfindung besteht auch darin, daß zusätzliche Umwälzpumpen nicht benötigt werden. Die Druckluft von geringer Menge (20 l/min bei 3 bar) kann ohne großen Energieaufwand durch einen kleinen Kompressor erzeugt werden bzw. an die vorhandene Spritzanlage mitangeschlossen werden.

Die Erfindung wird nachfolgend anhand eines Ausführungsbeispiels unter Bezugnahme auf die Zeichnung näher beschrieben ; es zeigen :

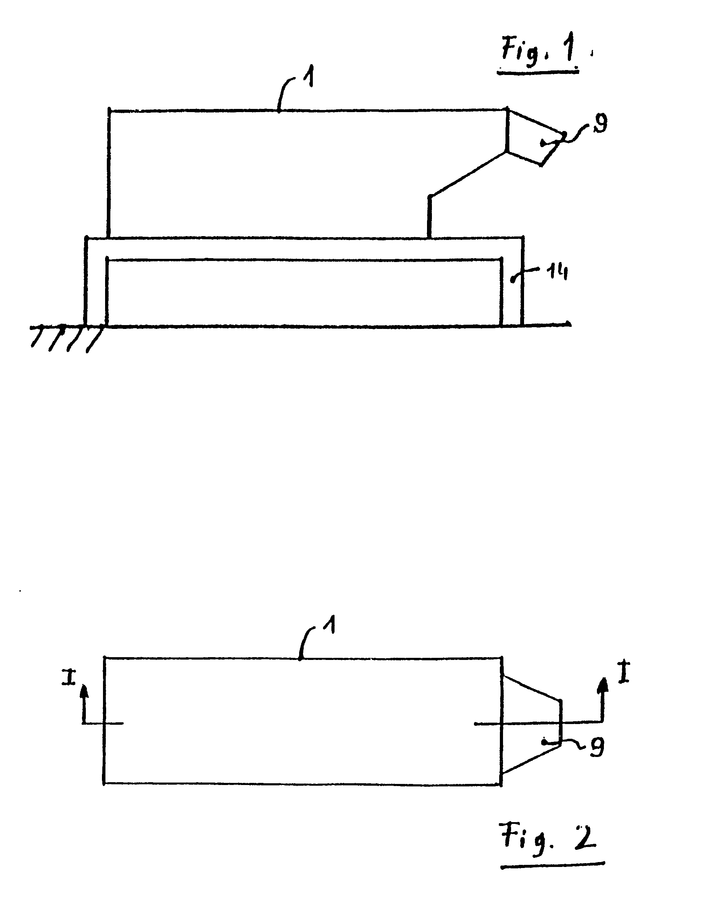

Fig. 1    eine Seitenansicht eines Aufbereitungsgerätes mit Gestell,
Fig. 2    eine Draufsicht auf das Gerät gemäß Fig. 1 und
Fig. 3    einen Schnitt I-I gemäß Fig. 2, und zwar in der Funktionsstellung des Schiebers in seiner ausgefahrenen Endstellung.

Das Aufbereitungsgerät umfaßt im wesentlichen einen Lackschlamm-Wassergemisch-Behälter 1, der auf einem unterseitigen Gestell 14 angeordnet ist. Der Behälter 1 weist im wesentlichen Quaderform auf, wobei eine Stirnseite des Behälters als eine Ablaufschräge 17 ausgebildet ist.

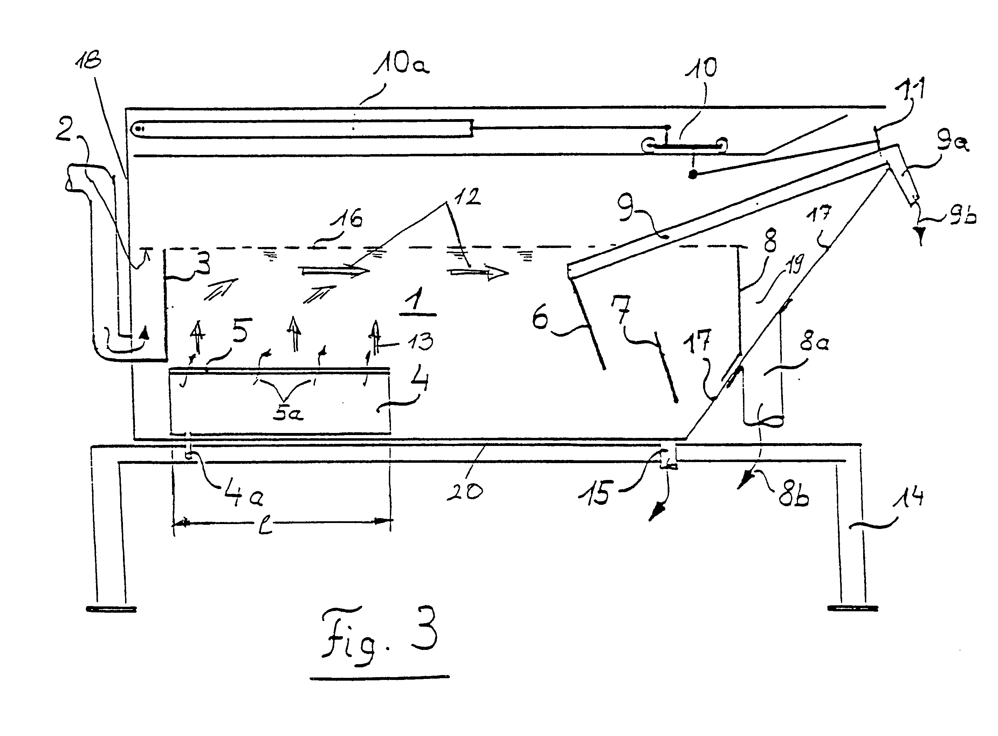

Der Behälter 1 besitzt an der der Ablaufschräge 17 gegenüberliegenden Stirnseite 18 eine Lackschlamm-Lackwasser-Zuleitung bzw. -Zuführungsöffnung 2, wobei das Berieselungswasser aus dem Bereich einer (nicht veranschulichten) Lacksprühwand, das angereichert ist mit Lackpartikeln und Koaguliermittel, in Richtung des Pfeiles 2a in den Behälter 1 einströmt. Die Zuführungsöffnung 2 wird hierbei insbesondere durch die ohnehin vorhandene Behälterstirnseite und eine behälterinnenseitige im wesentlichen vertikal verlaufende Vertikalwand 3 gebildet, die behälteroberseitig bis hin zur Wasseroberfläche 16 im Betrieb der Vorrichtung reicht. Dadurch wird eine breite Zuführungsöffnung 2 eingerichtet, die sich praktisch über die gesamte innere Behälterbreite erstreckt. Die Zuführungsöffnung 7 ist nach Art eines Wehrs aufgebaut und gestatet eine gerichtete Horizontalströmung 12 zumindest im Bereich der Wasseroberfläche 16 von der Stirnseite 18 zur Ablaufschräge 17 bzw. bis zum Wasseraustritt 19, der im Ausführungsbeispiel der Figur 3 eine im wesentlichen vertikal verlaufende Wand 8 umfaßt, die behälterunterseitig lösbar an der Ablaufschräge 17 befestigt ist. Die Vertikalwand 8 ist hierbei als Überlaufwehr ausgebildet, erstreckt sich über die gesamte innere Breitseite des Behälters und weist einen oberen Horizontalrand auf, der in etwa in Höhe des oberen Horizontalrandes der Vertikalwand 3 gelegen ist. Jenseits der Wasseroberfläche unmittelbar hinter der Wasseraustritts-Vertikalwand 8 befindet sich an etwas tiefer gelegener Stelle an der Ablaufschräge 17 ein Wasserablaufstutzen 8a, so daß das vom Lackschlamm gereinigte Wasser gemäß Pfeil 8b aus dem Behälter ausfließen und in einem geschlossenen Wasserkreislauf der eigentlichen Lackier-Spritzanlage wieder zugeführt werden kann, gegebenenfalls unter Anreicherung von zusätzlichem Koaguliermittel.

Über der Vertikalwand 8 befindet sich, in den eigentlichen Behälter 1 schräg eingehängt, eine Austragschräge 9 der Lackschlamm-Austragvorrichtung 10, die zumindest einen Schieber 11 aufweist, welcher über einen Arbeitszylinder 10a längs der Austragschräge 9 in einer Art und Weise hin- und herbewegt werden kann, daß der vom Wasser befreite Lackschlamm über einen Schlammablaufkanal 9a aus dem Behälter 1 in Richtung des Pfeils 9b und einem (nicht veranschaulichten) Auffangbehälter zugeleitet werden kann.

Im Behälter 1 ist im Bereich der Zuführungsöffnung 2 bzw. im Bereich der Vertikalwand 3 bodenseitig ein Druckluftbehälter 4 angeordnet, der einen unterseitigen Lufteintrittsstutzen 4a aufweist, durch den Druckluft von ca. 3 bar an den Druckluftbehälter 4 angelegt werden kann. Der Druckluftbehälter 4 weist oberseitig eine plane im wesentlichen nichtelastische gasdurchlässige Feststoffplatte 5 aus feinporösem Feststoffmaterial, z.B. Sintermaterial, auf. Die restlichen Seiten- und Bodenflächen des Druckluftbehälters 4 sind gasundurchlässig aufgebaut. In bevorzugter Ausführungsform ist die Feststoffplatte 5 von der Stirnseite 18 in Richtung Wasseraustritt 19 leicht nach unten geneigt. Der Druckluftbehälter 4 erstreckt sich über die gesamte innere Behälterbreite und nimmt bezüglich der oberen Horizontalströmung 12 einen vorderen Abschnitt $\ell$ im Behälter ein, wobei die Länge des vorderen Abschnitts $\ell$ in vorteilhafter Weiterbildung der Erfindung eingestellt werden kann, beispielsweise durch modulartige Ansätze von Druckluftbehälterteilen.

Im Betrieb des Aufbereitungsgeräts wird zum einen die bereits beschriebene gerichtete Horizontalströmung 12 zumindest im Bereich des Wasseroberfläche 16 und zum anderen durch Anlegen von Druck an den Druckluftbehälter 4 eine im wesentlichen aufwärts gerichtete flächige, nicht impulsartig wirkende Luftblasenströmung 13 im Lackschlamm-Wassergemisch eingerichtet, und zwar aufgrund der erfindungsgemäßen feinporösen Feststoffplatte, die feine poröse Durchtrittsöffnungen 5a aufweist. Die aufwärts strömenden feinsten Luftbläschen binden sich an die Lackschwebeteilchen und schaffen diese an die Wasesroberfläche 16, sofern diese tiefer schweben sollten. Durch die gerichtete Horizontalströmung 12 gelangen dann die Lackschwebeteile ohne Zuhilfenahme von mechanischen Fördergeräten zur Austragschräge 9. Mithin ist die Verklebungs- bzw. Veschmutzungsgefahr minimiert. Die Luftblasenströmung 13 läßt sich in bezug auf die Horizontalströmung 12 sowie in Abhängigkeit der auszuscheidenden Lackpartikel entsprechend regulieren, und zwar durch Anlegen eines mehr oder weniger starken Luftdrucks sowie durch Vergrößerung oder Verkeinerung der Feststoffplatte 5, deren Wirkfläche unterschiedlich groß gestaltet werden kann. Mithin genügt ein vergleichsweise kurzer vorderer Abschnitt $\ell$ eines Druckluftbehälters 4, um praktisch alle Lackschlamm-Schwebeteilchen der Austragschräge 9 zuzuführen. Ein Abweisblech 6 im Bereich des eingetauchten Endes der Austragschräge 9 sorgt dafür, daß auch tiefer gelegene Schwebeteilchen im Bereich des Austritts noch separiert werden können.

Die letztlich nicht mehr erfaßten Lackschwebeteilchen gelangen unter dem Abweiblech 6 hindurch zum Restauslaufstutzen 15 in einer Weise, daß weder der Druckluftbehälter 4 noch der Behälterboden 20 nennenswert durch abgesetzte Lackschlammreste verunreinigt wird. Der Abzug der nicht mehr erfaßten Lackschwebeteilchen wird durch ein weiteres Abweisblech 7 unterstützt, welches im Wirbel über dem Restauslaufstutzen 15 etwa parallel zum Abweisblech 6 quer über die Behälterinnenbreite angeordnet ist, und zwar in etwa mittig zwischen dem Abweisblech 6 und der Vertikalwand 8.

Das Lackschlamm-Wassergemisch kann entweder frei gemäß Pfeil 2a dem Behälter 1 zufließen, wenn die Wasseroberfläche 16 niedriger ist als der Abfluß der Lackspritzanlage, oder es ist möglich, einen Teil des Wasserstromes des Umwälzpumpe in der Spritzanlage abzuzweigen. Infolge des Einsatzes der Feststoffplatte 5 vergleichsweise kleiner Dimension ist es möglich, aufperlende Luftblasen über den Gesamtbereich der Wasseroberfläche in einer Weise zu erzeugen, daß die Lackschlammenteilchen nach oben und zum Wasseraustritt 19 transportiert werden, so daß kein Verspritzen und Verkleben des Innenraumes des Gerätes entsteht, wie dies bei Geräten nach dem Stand der Technik der Fall ist, die beispielsweise mit Sprühdosen und Verwirbelungseffekten arbeiten. Im Gegensatz zu einem Filter, bei dem das Berieselungswasser der Kanalisation zugeführt wird, kann das Wasser bei Einsatz des vorgeschlagenen Geräts im praktisch geschlossenen Kreis umlaufen.

# EP 0 266 476 B1

## Patentansprüche

1. Verfahren zum Aufbereiten von inhomogene Feststoff-Aufschlämmungen enthaltendem Wasser, insbesondere zum Trennen und Entfernen von Lackschlamm aus einem Lackschlamm-Wassergemisch, wobei das Lackschlamm-Wassergemisch oder dergl. einem Behälter (1) zugeleitet, an die Wasseroberfläche geführt und im Bereich der Wasseroberfläche (16) einer gerichteten Horizontalströmung (12) ausgesetzt wird, im Behälter der Lackschlammteil getrennt wird und die getrennten Teile aus Lackschlamm und Wasser aus dem Behälter wieder abgeleitet und gegebenenfalls weiterverwendet werden, dadurch gekennzeichnet, daß die im Behälter oben aufschwimmenden Lackschlamm-Schwebeteilchen durch eine ausschließlich in einem vorzugsweise ersten bzw. vorderen Horizontalströmungsabschnitt (1) ausgebildete flächige im wesentlichen aufwärts gerichtete Luftblasenströmung (13) aus feinsten Luftbläschen praktisch über dem gesamten Bereich der Wasseroberfläche (16) gehalten, mit der Horizontalströmung (12) mitgeführt und im Bereich des Endes der Horizontalströmung (12) einer mechanischen Schlammaustragvorrichtung (10) zugeführt werden.

2. Verfahren nach Anspruch 1, dadurch gekennzeichnet, daß — bezogen auf die Richtung der Horizontalströmung (12) — die Länge des insbesondere vorderen Luftströmungsabschnitts (1) einstellbar ist.

3. Gerät zur Durchführung des Verfahrens nach einem der Ansprüche 1 oder 2, mit einem Lackschlamm-Wassergemischbehälter (1), welcher eine Lackschlamm-Wassergemisch-Zuführungsleitung bzw. -öffnung (2) und auf der entgegengesetzten Behälterseite einen Austritt (19) aufweist, um im Bereich der Wasseroberfläche eine gerichtete Horizontalströmung (12) des Lackschlamm-Wassergemisches einzurichten, sowie mit einer Lackschlamm-Austragvorrichtung, dadurch gekennzeichnet, daß auf dem Behälterboden (20) im Bereich unterhalb der Zuführungsöffnung (2) ein Druckluftbehälter (4) mit oberseitiger gasdurchlässiger Feststoffplatte (5) aus fein porösem Feststoffmaterial vorgesehen ist, wobei sich die Feststoffplatte (5) über die gesamte innere Breite des Behälters (1) und vorzugsweise über einen vorderen Abschnitt (1) in Richtung Wasseraustritt (19) erstreckt.

4. Gerät nach Anspruch 3, mit einer unterseitigen Zuführungsöffnung mit nachgeordneter im wesentlichen vertikal verlaufender Zwischenwand (3), dadurch gekennzeichnet, daß — gesehen in Richtung der Horizontalströmung (12) der Zwischenwand (3) die Feststoffplatte (5) unmittelbar nachgeordnet ist.

5. Gerät nach einem der Ansprüche 3 oder 4, dadurch gekennzeichnet, daß der Wasseraustritt (19) als Überlauf für gereinigtes Wasser mit einer im wesentlichen vertikal verlaufenden Wand (8) ausgebildet ist.

6. Gerät nach einem der Ansprüche 3 bis 5, dadurch gekennzeichnet, daß die Zuführungsöffnung (2) und/oder der Wasseraustritt (19) sich über die gesamte innere Breite des Behälters (1) erstreckt/erstrecken.

7. Gerät nach Anspruch 6, dadurch gekennzeichnet, daß die Zuführungsöffnungs-Vertikalwand (3) und/oder die Wasseraustritts-Vertikalwand (8) lösbar im Behälter (1) befestigt ist/sind.

8. Gerät nach einem der Ansprüche 3 bis 7, dadurch gekennzeichnet, daß die Feststoffplatte (5) eine einstellbare Länge (1) in Richtung Wasseraustritt (19) aufweist bzw. modulartige Verlängerungsstücke eines Druckluftbehälters (4) vorgesehen sind.

9. Gerät nach einem der Ansprüche 4 bis 8, dadurch gekennzeichnet, daß die Wassesraustritts-Vertikalwand (8) bodenseitig auf einer Ablaufschräge (17) des Behälters (1) befestigt und am unteren Ende der Ablaufschräge (17) ein zusätzlicher Auslaufstutzen (15) vorgesehen ist.

10. Gerät nach Anspruch 9, dadurch gekennzeichnet, daß zwischen einem schrägen im Bereich der Wasseroberfläche sich befindlichen Abweisblech (6) einer Austragsschräge (9) der Lackschlamm-Austragvorrichtung (10) und der Wasseraustritts-Vertikalwand (8) zumindest ein weiteres quer über die innere Behälterbreite sich erstreckendes schräges Abweisblech (7) im Bereich des zusätzlichen Auslaufstutzens (15) im Behälter (1) angeordnet ist.

11. Gerät nach einem der Ansprüche 3 bis 10, dadurch gekennzeichnet, daß die Feststoffplatte (5) aus Sintermaterial oder als poröses Kunststoff-Preßteil ausgebildet ist.

## Claims

1. Process for preparing water containing inhomogeneous solid slurries, in particular for separating and removing varnish slurry from a varnish slurry and water mixture, wherein the varnish slurry and water mixture or the like is fed into a vessel (1), is brought to the water surface and, in the region of the water surface (16), is subjected to a directional horizontal flow (12), the varnish slurry part is separated in the vessel and the separated parts of varnish slurry and water are discharged again from the vessel and are optionally re-used, characterised in that the floating particles of varnish slurry floating at the top of the vessel are held virtually over the whole area of the water surface (16) by a plane, substantially upwardly oriented stream of extremely small air bubbles (13) formed exclusively in a preferably first or front horizontal flow section (1), the floating particles are

6

carried along with the horizontal flow (12) and are fed to a mechanical slurry discharging device (10) in the region of the end of the horizontal flow (12).

2. Process according to claim 1, characterised in that — relative to the direction of the horizontal flow (12) — the length of the, in particular, front, air flow section (1) is adjustable.

3. Apparatus for carrying out the process according to one of claims 1 or 2, with a vessel (1) for the varnish slurry and water mixture, which vessel has a feed pipe or aperture (2) for the varnish slurry and water mixture and, on the opposite side of the vessel, an outlet (19) in order to set up in the region of the water surface a directional horizontal flow (12) of the varnish slurry and water mixture, the apparatus also having a varnish slurry discharge device, characterised in that a compressed air vessel (4), having on the upper side a gas-permeable solid plate (5) composed of finely porous solid material, is provided on the vessel base (20) in the region below the feed aperture (2), the solid plate (5) extending over the entire inner width of the vessel (1) and preferably over a front section (1) in the direction of the water outlet (19).

4. Apparatus according to claim 3, with a feed aperture on the under-side with a partition wall (3) arranged in series and extending substantially vertically, characterised in that, viewed in the direction of the horizontal flow (12), the partition (3) is located immediately behind the solid plate (5).

5. Apparatus according to one of claims 3 or 4, characterised in that the water outlet (19) is formed as an overflow for cleaned water with a substantially vertical wall (8).

6. Apparatus according to one of claims 3 to 5, characterised in that the feed aperture (2) and/or the water outlet (19) extends/extend over the entire inner width of the vessel (1).

7. Apparatus according to claim 6, characterised in that the feed aperture vertical wall (3) and/or the water outlet vertical wall (8) is/are fixed detachably in the vessel (1).

8. Apparatus according to one of claims 3 to 7, characterised in that the solid plate (5) has an adjustable length (1) in the direction of the water outlet (19) or module-like extension pieces of a compressed air vessel (4) are provided.

9. Apparatus according to one of claims 4 to 8, characterised in that the water outlet vertical wall (8) is fixed at the base to a discharge slope (17) of the vessel (1) and an additional drainage nozzle (15) is provided at the lower end of the discharge slope (17).

10. Apparatus according to claim 9, characterised in that between a slanting deflection plate (6), located in the region of the water surface, of a discharge slope (9) of the varnish slurry discharge device (10) and the water outlet vertical wall (8), at least one further slanting deflection plate (7) extending transversely over the inner vessel width is mounted in the vessel (1) in the region of the additional drainage nozzle (15).

11. Apparatus according to one of claims 3 to 10, characterised in that the solid plate (5) is formed of sintered material or as a porous plastics pressed part.

## Revendications

1. Procédé pour le traitement d'eaux contenant des suspensions de matières solides non homogènes, en particulier pour la séparation et l'élimination de boue de vernis provenant d'un mélange d'eau-boue de vernis, dans lequel le mélange d'eau-boue de vernis ou un produit analogue est amené à un réservoir (1), guidé sur la surface d'eau et soumis, dans la zone de la surface d'eau (16), à un écoulement horizontal dirigé (12), la fraction de boue de vernis étant séparée dans le réservoir et les fractions séparées de boue de vernis et d'eau étant à nouveau déviées en dehors du réservoir et éventuellement utilisées ultérieurement, caractérisé en ce que les particules en suspension de boue de vernis qui surnagent dans le réservoir sont maintenues pratiquement sur toute la zone de la surface d'eau (16) par un écoulement (13) de très fines bulles d'air, en nappe, qui est dirigé sensiblement vers le haut et qui est réalisé exclusivement dans une section de l'écoulement horizontal (1) de préférence située en premier ou respectivement à l'avant, sont entraînées par l'écoulement horizontal (12) et sont amenées à un dispositif d'évacuation de boue mécanique dans la zone de la fin de l'écoulement horizontal (12).

2. Procédé suivant la revendication 1, caractérisé en ce que la longueur de la section d'écoulement d'air avant (1) en particulier peut être ajustée par rapport à la direction de l'écoulement horizontal (12).

3. Dispositif pour la mise en oeuvre du procédé suivant l'une des revendications 1 et 2, comprenant un réservoir à mélange d'eau-boue de vernis (1), qui présente un conduit ou ouverture d'amenée (2) de mélange d'eau-boue de vernis et, du côté opposé du réservoir, une sortie (19), pour établir dans la zone de la surface d'eau un écoulement horizontal dirigé (12) du mélange d'eau-boue de vernis, ainsi qu'un dispositif d'évacuation de boue de vernis, caractérisé en ce qu'un réservoir à air comprimé (4) présentant une plaque (5) perméable aux gaz, du côté supérieur, en une matière solide finement poreuse est prévu sur le fond (20) du réservoir dans la zone située en dessous de l'ouverture d'amenée (2), la plaque (5) s'étendant sur toute la largeur interne du réservoir (1) et de préférence sur une section avant (1) dans la direction de la sortie d'eau (19).

4. Dispositif suivant la revendication 3, comprenant une ouverture d'amenée du côté inférieur avec une paroi intermédiaire (3) située en aval et s'étendant sensiblement verticalement, caractérisé en ce que, vue dans la direction de l'écoulement horizontal (12), la plaque (5) est agencée directement en aval de la paroi intermédiaire (3).

5. Dispositif suivant l'une des revendications 3 et 4, caractérisé en ce que la sortie d'eau (19) est réalisée sous la forme d'un trop-plein pour l'eau purifiée, avec une paroi (8) qui s'étend sensiblement verticalement.

6. Dispositif suivant l'une des revendications 3 à 5, caractérisé en ce que l'ouverture d'amenée (2) et/ou la sortie d'eau (19) s'étendent sur toute la largeur interne du réservoir (1).

7. Dispositif suivant la revendication 6, caractérisé en ce que la paroi verticale (3) de l'ouverture d'amenée et/ou la paroi verticale (8) de la sortie d'eau sont fixées de manière détachable dans le réservoir (1).

8. Dispositif suivant l'une des revendications 3 à 7, caractérisé en ce que la plaque (5) présente une longueur ajustable (1) en direction de la sortie d'eau ou respectivement en ce que des pièces d'allongement de type modules d'un réservoir à air comprimé (4) sont prévues.

9. Dispositif suivant l'une des revendications 4 à 8, caractérisé en ce que la paroi verticale (8) de la sortie d'eau est fixée, du côté fond, sur une déclivité de sortie (17) du réservoir (1) et en ce qu'un raccord de décharge (15) supplémentaire est prévu à l'extrémité inférieure de la déclivité de sortie (17).

10. Dispositif suivant la revendication 9, caractérisé en ce qu'entre une plaque de déviation (6) inclinée, située dans la sone de la surface d'eau, d'un pan incliné (9) du dispositif d'évacuation de boue de vernis (10) et la paroi verticale (8) de la sortie d'eau, au moins une autre plaque de déviation inclinée (7) s'étendant transversalement sur la largeur interne du réservoir est agencée dans le réservoir (1) dans la zone du raccord de décharge supplémentaire (15).

11. Dispositif suivant l'une des revendications 3 à 10, caractérisé en ce que la plaque (5) est réalisée en une matière frittée ou sous la forme d'une pièce comprimée en matière synthétique, poreuse.

Fig. 1

Fig. 2

Fig. 3

EP 0 266 476 B1